# EUROPÄISCHE PATENTANMELDUNG

(11) **EP 4 102 675 A1**
(43) Veröffentlichungstag der Anmeldung: **14.12.2022**
(21) Anmeldenummer: 21179034.0
(22) Anmeldetag: 11.06.2021
(51) Int. Cl.: H02J 7/00, H01R 13/58

(54) **ANSCHLUSSSYSTEM FÜR EINE STROMLEITUNG**

(71) Anmelder: Hilti Aktiengesellschaft, 9494 Schaan (LI)
(72) Erfinder: Reiner, Michael, 86836 Schwabmünchen (DE); Janczyk, Leonard, 86899 Landsberg am Lech (DE); Wang, Si, 86836 Untermeitingen (DE); Paszehr, Kay, 82237 Woerthsee (DE); Hofmann, Karl-Heinz, 86947 Weil (DE)
(74) Vertreter: Hilti Aktiengesellschaft Corporate Intellectual Property

(57) **Zusammenfassung**

Anschlusssystem, insbesondere für ein Ladegerät oder eine Werkzeugmaschine, enthaltend einen Anschlussstecker mit einer Stromleitung und eine Buchsenvorrichtung mit wenigstens einem Buchsenelement zum wiederlösbaren Verbinden mit dem Anschlussstecker.

Die Buchsenvorrichtung enthält eine erste Zugentlastungseinrichtung, um einer auf die Stromleitung ausgeübten Zuglast entgegenzuwirken, wenn sich der Anschlussstecker und das Buchsenelement in einem verbundenen Zustand befinden.

Ladegerät mit einem Anschlusssystem enthaltend einen Anschlussstecker mit einer Stromleitung und eine Buchsenvorrichtung mit wenigstens einem Buchsenelement zum wiederlösbaren Verbinden mit dem Anschlussstecker.

Werkzeugmaschine mit einem Anschlusssystem enthaltend einen Anschlussstecker mit einer Stromleitung und eine Buchsenvorrichtung mit wenigstens einem Buchsenelement zum wiederlösbaren Verbinden mit dem Anschlussstecker.

Buchsenvorrichtung mit wenigstens einem Buchsenelement zum wiederlösbaren Verbinden mit einem Anschlussstecker für ein Anschlusssystem.

## Beschreibung

Die vorliegende Erfindung betrifft ein Anschlusssystem, insbesondere für ein Ladegerät oder eine Werkzeugmaschine, enthaltend einen Anschlussstecker mit einer Stromleitung und eine Buchsenvorrichtung mit wenigstens einem Buchsenelement zum wiederlösbaren Verbinden mit dem Anschlussstecker.

Des Weiteren betrifft die vorliegende Erfindung ein Ladegerät mit einem Anschlusssystem enthaltend einen Anschlussstecker mit einer Stromleitung und eine Buchsenvorrichtung mit wenigstens einem Buchsenelement zum wiederlösbaren Verbinden mit dem Anschlussstecker.

Darüber hinaus betrifft die vorliegende Erfindung eine Werkzeugmaschine mit einem Anschlusssystem enthaltend einen Anschlussstecker mit einer Stromleitung und eine Buchsenvorrichtung mit wenigstens einem Buchsenelement zum wiederlösbaren Verbinden mit dem Anschlussstecker.

Ferner betrifft die vorliegende Erfindung eine Buchsenvorrichtung mit wenigstens einem Buchsenelement zum wiederlösbaren Verbinden mit einem Anschlussstecker für ein Anschlusssystem, insbesondere für ein Ladegerät oder eine Werkzeugmaschine.

Stromkabel, welche auch als Stromleitung bezeichnet werden können, sind weitestgehend durch den Stand der Technik bekannt und können beispielsweise dazu dienen, mit einer Werkzeugmaschine oder einem Ladegerät verbunden zu werden, um die Werkzeugmaschine oder das Ladegerät mit elektrischer Energie zu versorgen. Das in diesem Zusammenhang gemeinte Ladegerät dient zum Aufladen eines oder mehrerer Akkumulatoren (auch Akku genannt) mit elektrischer Energie.

Für gewöhnlich sind die Stromkabel sowie die Vorrichtungen zum Verbinden des Stromkabels mit einer Werkzeugmaschine oder einem Ladegerät relativ robust ausgestaltet, um auch hohen mechanischen Beanspruchungen, Verschleiß und Nutzungsschäden entgegenzuwirken sowie funktionsfähig zu bleiben. Nichtsdestotrotz kann es durch eine unsachgemäße Handhabung zu Beschädigungen an dem Stromkabel kommen, die ein Austausch des Stromkabels für eine weiterhin sichere Verwendung der Werkzeugmaschine oder des Ladegeräts notwendig ist.

Oftmals ist jedoch der Austausch oder auch nur das Ablösen bzw. Entfernen eines Stromkabels gemäß dem Stand der Technik relativ schwierig oder sogar unmöglich. Folglich ist es oftmals notwendig, dass die Werkzeugmaschine oder das Ladegerät zu einem Fachmann in einem Fachbetrieb gebracht werden muss, damit das beschädigte Stromkabel ausgetauscht werden kann. Für die Dauer der Reparatur bzw. des Austausches des Stromkabels steht dementsprechend die Werkzeugmaschine oder Ladegerät einem Anwender nicht zur Verfügung.

Aufgabe ist es daher das vorstehend beschriebene Problem zu lösen bzw. ein Anschlusssystem, insbesondere für ein Ladegerät oder eine Werkzeugmaschine, enthaltend einen Anschlussstecker mit einer Stromleitung und eine Buchsenvorrichtung mit wenigstens einem Buchsenelement zum wiederlösbaren Verbinden mit dem Anschlussstecker, ein Ladegerät mit einem Anschlusssystem enthaltend einen Anschlussstecker mit einer Stromleitung und eine Buchsenvorrichtung mit wenigstens einem Buchsenelement zum wiederlösbaren Verbinden mit dem Anschlussstecker, eine Werkzeugmaschine mit einem Anschlusssystem enthaltend einen Anschlussstecker mit einer Stromleitung und eine Buchsenvorrichtung mit wenigstens einem Buchsenelement zum wiederlösbaren Verbinden mit dem Anschlussstecker bzw. eine Buchsenvorrichtung mit wenigstens einem Buchsenelement zum wiederlösbaren Verbinden mit einem Anschlussstecker für ein Anschlusssystem, insbesondere für ein Ladegerät oder eine Werkzeugmaschine bereitzustellen mit dem das vorstehend beschriebene Problem gelöst werden kann.

Die Aufgabe wird gelöst durch den Gegenstand des Anspruchs 1, 7, 8 oder 9. Vorteilhafte Ausgestaltungsformen der Erfindung sind in den entsprechenden Unteransprüchen aufgeführt.

Die Aufgabe dabei insbesondere gelöst durch ein Anschlusssystem, insbesondere für ein Ladegerät oder eine Werkzeugmaschine, enthaltend einen Anschlussstecker mit einer Stromleitung und eine Buchsenvorrichtung mit wenigstens einem Buchsenelement zum wiederlösbaren Verbinden mit dem Anschlussstecker.

Erfindungsgemäß ist eine Buchsenvorrichtung eine erste Zugentlastungseinrichtung enthalten, um einer auf die Stromleitung ausgeübten Zuglast entgegenzuwirken, wenn sich der Anschlussstecker und das Buchsenelement in einem verbundenen Zustand befinden.

Gemäß einer vorteilhaften Ausführungsform der vorliegenden Erfindung kann es möglich sein, dass die Buchsenvorrichtung eine zweite Zugentlastungseinrichtung enthält. Hierdurch kann die Stromleitung zusätzlich gegen eine Zugbelastung gesichert werden.

Entsprechend einer vorteilhaften Ausführungsform der vorliegenden Erfindung kann es möglich sein, dass die zweite Zugentlastungseinrichtung im Wesentlichen als bogenförmigen Nut zur Aufnahme wenigstens eines Teilabschnitts der Stromleitung ausgestaltet ist. Hierdurch kann auf einfache Art und Weise die Stromleitung gegen eine Zugbelastung gesichert werden.

Gemäß einer vorteilhaften Ausführungsform der vorliegenden Erfindung kann es möglich sein, dass die zweite Zugentlastungseinrichtung im Wesentlichen als Würgenippel mit einer im Wesentlichen zentralen Aussparung zur Durchführung der Stromleitung ausgestaltet ist.

Entsprechend einer vorteilhaften Ausführungsform der vorliegenden Erfindung kann es möglich sein, dass die zweite Zugentlastungseinrichtung im Wesentlichen als Verschraubungseinrichtung mit einem Klemmelement zum wiederlösbaren Einklemmen der Stromleitung ausgestaltet ist. Es ist dabei auch möglich, dass die Verschraubungseinrichtung zusätzlich zum wiederlösbaren Verbinden eines ersten und zweiten Gehäuseteils dient, wobei die Verschraubungseinrichtung durch ein entsprechendes Schraubenloch durch das erste Gehäuseteil zu dem zweiten Gehäuseteil geführt ist.

Gemäß einer vorteilhaften Ausführungsform der vorliegenden Erfindung kann es möglich sein, dass eine Deckeleinrichtung enthalten ist, wobei die Deckeleinrichtung die zweite Zugentlastungseinrichtung enthält und zum wenigstens teilweilen Abdecken der Buchsenvorrichtung ausgestaltet ist. Hierdurch kann effektiv die Funktion des Abdeckens der Buchsenvorrichtung und die Funktion der Zugentlastung der Stromleitung miteinander verbunden werden.

Des Weiteren wird die Aufgabe gelöst durch ein Ladegerät mit einem Anschlusssystem enthaltend einen Anschlussstecker mit einer Stromleitung und eine Buchsenvorrichtung mit wenigstens einem Buchsenelement zum wiederlösbaren Verbinden mit dem Anschlussstecker.

Darüber hinaus wird die Aufgabe gelöst durch eine Werkzeugmaschine mit einem Anschlusssystem enthaltend einen Anschlussstecker mit einer Stromleitung und eine Buchsenvorrichtung mit wenigstens einem Buchsenelement zum wiederlösbaren Verbinden mit dem Anschlussstecker.

Ferner wird die Aufgabe gelöst durch eine Buchsenvorrichtung mit wenigstens einem Buchsenelement zum wiederlösbaren Verbinden mit einem Anschlussstecker für ein Anschlusssystem, insbesondere für ein Ladegerät oder eine Werkzeugmaschine.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine perspektivische Ansicht auf die Unterseite eines Gehäuses eines Ladegerätes;
- Figur 2: eine perspektivische Ansicht auf eine Buchsenvorrichtung mit einem Buchsenelement;
- Figur 3: eine erste perspektivische Ansicht auf die Buchsenvorrichtung mit dem Buchsenelement und den Anschlussstecker mit einer Stromleitung;
- Figur 4: eine zweite perspektivische Ansicht auf die Buchsenvorrichtung mit dem Buchsenelement und den Anschlussstecker mit der Stromleitung;
- Figur 5: eine dritte perspektivische Ansicht auf die Buchsenvorrichtung mit dem Buchsenelement und den Anschlussstecker mit der Stromleitung;
- Figur 6: eine erste perspektivische Ansicht auf die Buchsenvorrichtung mit einer Deckeleinrichtung;
- Figur 7: eine zweite perspektivische Ansicht auf die Buchsenvorrichtung mit der Deckeleinrichtung;
- Figur 8: eine dritte perspektivische Ansicht auf die Buchsenvorrichtung mit der Deckeleinrichtung;
- Figur 9: eine erste perspektivische Ansicht auf eine Innenansicht der Deckeleinrichtung mit einer zweiten Zugentlastungseinrichtung;
- Figur 10: eine zweite perspektivische Ansicht auf die Innenansicht der Deckeleinrichtung mit der zweiten Zugentlastungseinrichtung
- Figur 11: eine dritte perspektivische Ansicht auf die Innenansicht der Deckeleinrichtung mit der zweiten Zugentlastungseinrichtung

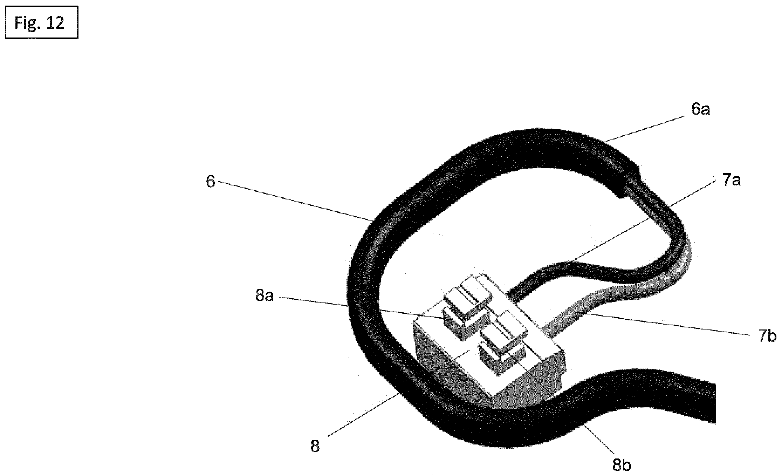

- Figur 12: eine erste perspektivische Ansicht auf den Anschlussstecker mit einem Teil der Stromleitung;

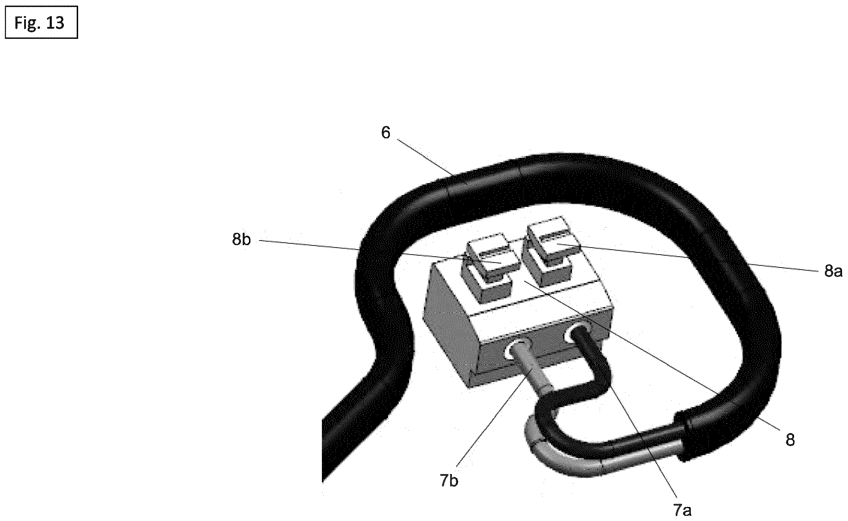

- Figur 13: eine zweite perspektivische Ansicht auf den Anschlussstecker mit einem Teil der Stromleitung; und

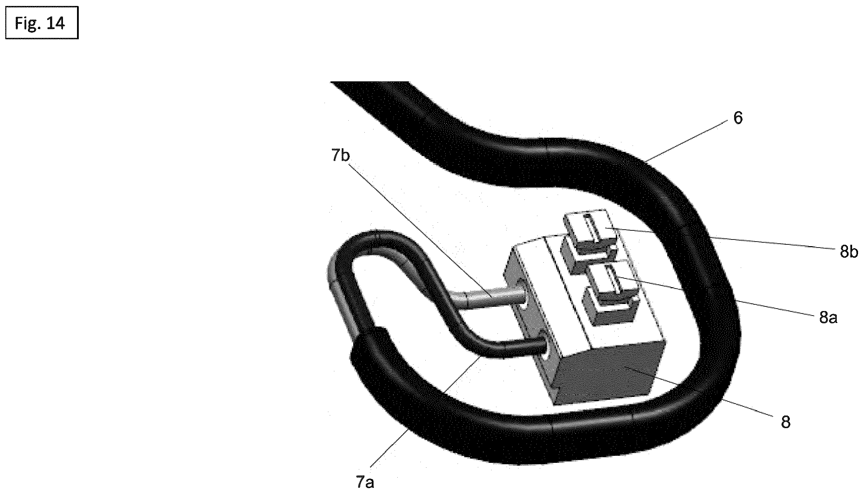

- Figur 14: eine dritte perspektivische Ansicht auf den Anschlussstecker mit einem Teil der Stromleitung.

### Ausführungsbeispiele:

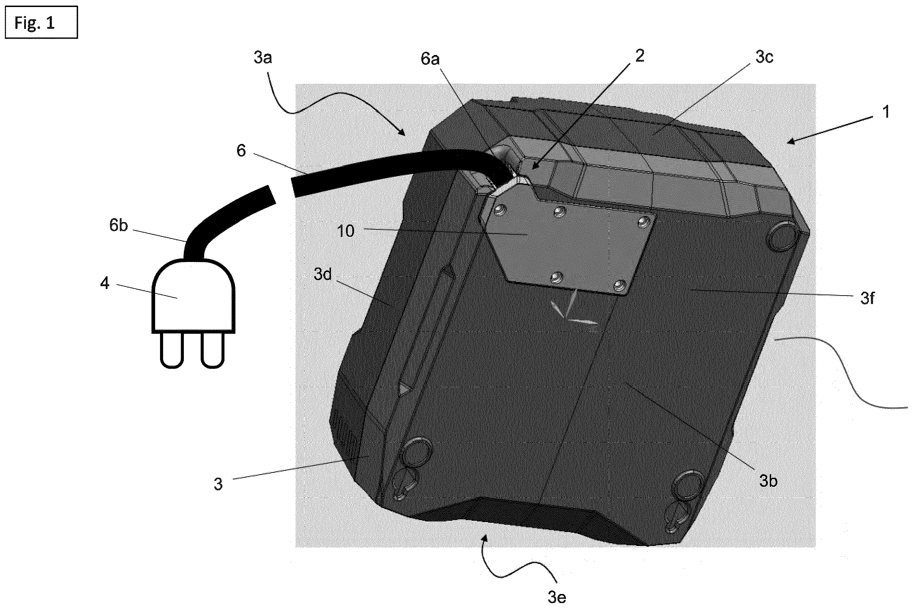

Figur 1 zeigt ein Ladegerät 1 mit einem ersten Ausführungsbeispiel eines erfindungsgemäßen Anschlusssystems 2.

Das Ladegerät 1 dient dabei zum Aufladen eines Akkumulators mit elektrischer Energie. Der Akkumulator ist in den Figuren nicht dargestellt.

Anstelle des Ladegeräts 1 kann das erfindungsgemäße Anschlusssystem 2 auch an einer Werkzeugmaschine positioniert sein. Die Werkzeugmaschine ist in den Figuren nicht gezeigt.

Das in Figur 1 dargestellt Ladegerät 1 enthält im Wesentlichen ein Gehäuse 3, eine Steuerungsvorrichtung, eine Akkuschnittstelle und das erfindungsgemäße Anschlusssystem 2. Das Gehäuse 3 des Ladegeräts 2 enthält wiederum eine Oberseite 3a, eine Unterseite 3b sowie eine erste, zweite, dritte und vierte Seitenwand 3c, 3d, 3e, 3f.

In den Figuren ist die Oberseite 3a und zwei Seitenwände 3e, 3f nicht gezeigt und lediglich andeutet. An der Oberseite 3a des Gehäuses 3 ist die Akkuschnittstelle positioniert. Die in den

Figuren nicht gezeigte Akkuschnittstelle dient zum wiederlösbaren Verbinden eines Akkumulators mit dem Ladegerät 1. In eine verbundenen Zustand des Akkumulators mit dem Ladegerät 1 kann elektrische Energie von dem Ladegerät 1 zu dem Akkumulator gelangen und in dem Akkumulator gespeichert werden.

Die Steuerungsvorrichtung ist im Inneren des Gehäuses 3 positioniert und dient zum Steuern sowie Regeln der verschiedenen Funktionen des Ladegeräts 1. Zu den Funktionen des Ladegeräts 1 gehören unter anderem die bedarfsmäßige Anpassung der elektrischen Energie, die an einen mit dem Ladegerät 1 verbundenen Akkumulator gelangen soll.

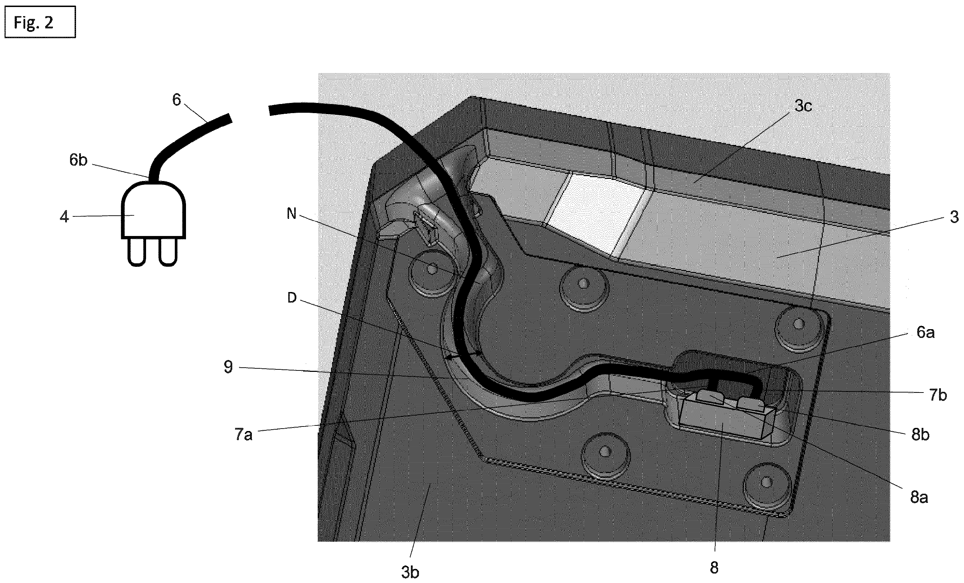

Das in Figur 1 und 2 gezeigte Anschlusssystem 2 gemäß des ersten Ausführungsbeispiels ist an einer Außenkante bzw. Ecke an der Unterseite 3b des Gehäuses 3 des Ladegeräts 1 positioniert. Entsprechend eines in den Figuren nicht gezeigten alternativen Ausführungsbeispiels kann das erfindungsgemäße Anschlusssystem 2 auch in der Mitte (bzw. in dem Zentrum) der flach ausgestalteten Unterseite 3b des Gehäuses 3 positioniert sein.

Wie in Figur 2 gezeigt, enthält das Anschlusssystem 2 gemäß des ersten Ausführungsbeispiels im Wesentlichen einen Anschlussstecker 4 und eine Buchsenvorrichtung 5. Der Anschlussstecker 4 ist wiederum mit einer Stromleitung 6 (auch Stromkabel genannt) verbunden. Die Stromleitung 6 weist dabei ein erstes Ende 6a und zweites Ende 6b auf. Das erste Ende 6a der Stromleitung 6 ist mit dem Anschlussstecker 4 verbunden. Der Anschlussstecker 4 enthält wiederum eine erste Leitung 7a und eine zweite Leitung 7b. Die erste Leitung 7a kann auch als Außenleiter oder Phase bezeichnet werden. Die zweite Leitung 7b kann auch als Neutralleiter bezeichnet werden.

An dem zweiten Ende 6b der Stromleitung 6 ist ein Netzstecker (auch Steckdosenstecker genannt) für eine Netzstromquelle (auch Steckdose genannt) positioniert.

Die Buchsenvorrichtung 5 enthält ein Buchsenelement 8 zum wiederlösbaren Verbinden mit dem Anschlussstecker 4. Anstelle eines einzigen Buchsenelements 8 können auch zwei oder mehr Buchsenelemente vorgesehen sein. Ein Buchsenelement 8 enthält dabei wenigstens einen Anschluss 8a für die erste Leitung 7a und einen Anschluss 8b für die zweite Leitung 7b.

Der Anschlussstecker 4 ist dazu ausgestaltet, wiederlösbar mit dem Buchsenelement 8 verbunden zu werden. Die erste Leitung des Anschlusssteckers 4 wird dazu mit dem Anschluss 8a für die erste Leitung 7a und die zweite Leitung 7b des Anschlusssteckers 4 wird wiederum mit dem Anschluss 8b für die zweite Leitung 7b verbunden. Die Verbindung der ersten Leitung 7a mit dem Anschluss 8a für die erste Leitung 7a sowie die Verbindung der zweiten Leitung 7b mit dem Anschluss 8b für die zweite Leitung 7b sind als Steckverbindung ausgestaltet. Entsprechend eines alternativen Ausführungsbeispiels können die Verbindungen auch als Klemmverbindungen ausgestaltet sein.

Des Weiteren enthält die Buchsenvorrichtung 8 eine erste Zugentlastungseinrichtung 9. Die Zugentlastungseinrichtung 9 (auch Zugsperre oder Kabelstopper genannt) dient dazu einer auf die Stromleitung 6 ausgeübten Zuglast (oder Zugkraft) entgegenzuwirken und zu verhindern, dass die Stromleitung 6 ungewollt aus der Buchsenvorrichtung 8 gezogen werden kann.

Wie in Figur 2 ersichtlich ist die erste Zugentlastungseinrichtung 9 gemäß dem ersten Ausführungsbeispiel des erfindungsgemäßen Anschlusssystems 2 als bogenförmigen Nut N zur Aufnahme eines Teilabschnitts der Stromleitung 6 ausgestaltet. Die Bogenform der Nut ist dabei im Wesentlichen C-förmig ausgestaltet.

Alternativ kann die Bogenform der Nut N auch S-förmig ausgestaltet sein.

Die bogenförmige Nut N kann auch als Kanal oder Vertiefung bezeichnet werden. Die bogenförmige Nut N weist einen im Wesentlichen gleichmäßigen Durchmesser (bzw. Breite) D auf, die ungefähr dem Durchmesser (bzw. der Breite) der Stromleitung 6 entspricht, sodass ein Teilbereich der Stromleitung 6 passgenau in die bogenförmige Nut N eingelegt werden kann. Durch die Passgenauigkeit ist der Teilbereich der Stromleitung 6 kraftschlüssig mit der bogenförmigen Nut N verbunden. Mit Hilfe der Bogenform der Nut N kann ein größerer Anteil der Stromleitung 6 in der als Nut N ausgestalteten Zugentlastungseinrichtung 9 positioniert werden und folglich einer größeren Zuglast entgegengewirkt werden als bei einer geradlinig ausgestalteten Nut N.

Des Weiteren enthält die Buchsenvorrichtung 5 eine Deckeleinrichtung 10, vgl. Figur 1. Die Deckeleinrichtung 10 dient dazu, die Buchsenvorrichtung 5 abzudecken und dadurch die Buchsenvorrichtung 5 sowie die einzelnen Bestandteile der Buchsenvorrichtung 5 vor mechanischen Beanspruchungen und/oder Verschmutzungen zu schützen. Wie in den Figuren ersichtlich ist die Deckeleinrichtung 10 durch ein Scharnier 11 schwenkbar zu der Buchsenvorrichtung 5 angeordnet, sodass die Buchsenvorrichtung 5 durch ein entsprechendes Abschwenken der Deckeleinrichtung 10 verschlossen werden kann. Figur 1 zeigt die Buchsenvorrichtung 5 mit der Deckeleinrichtung 10 in einem verschlossenen Zustand. Figur 2 zeigt die Buchsenvorrichtung 5 ohne die Deckeleinrichtung 10.

Des Weiteren enthält die Deckeleinrichtung 10 eine zweite Zugentlastungseinrichtung 12. Die zweite Zugentlastungseinrichtung 12 ist dabei an einer Unterseite der Deckeleinrichtung 10 positioniert und im Wesentlichen als Klemmelement an einem Ende der Deckeleinrichtung 10 zum wiederlösbaren Einklemmen der Stromleitung 6 ausgestaltet. Die als Klemmelement ausgestaltete zweite Zugentlastungseinrichtung 12 gemäß dem ersten Ausführungsbeispiel ist in den Figuren nicht gezeigt.

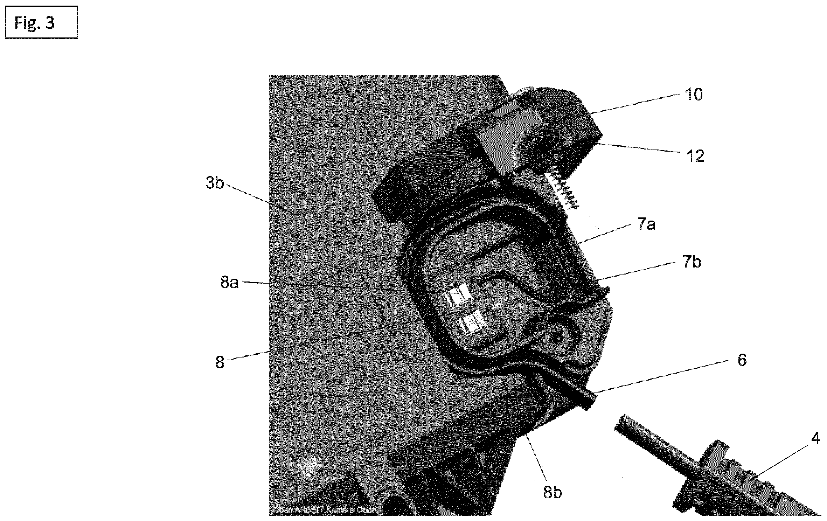

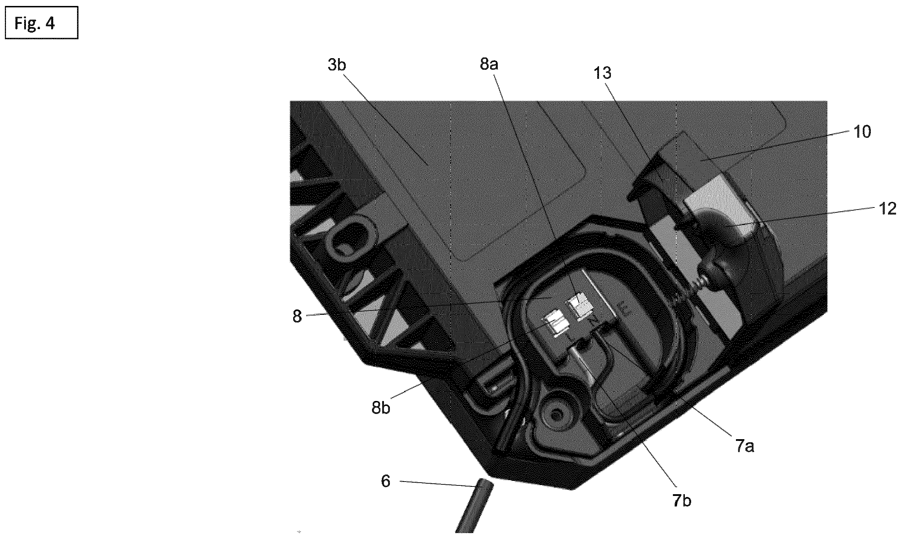

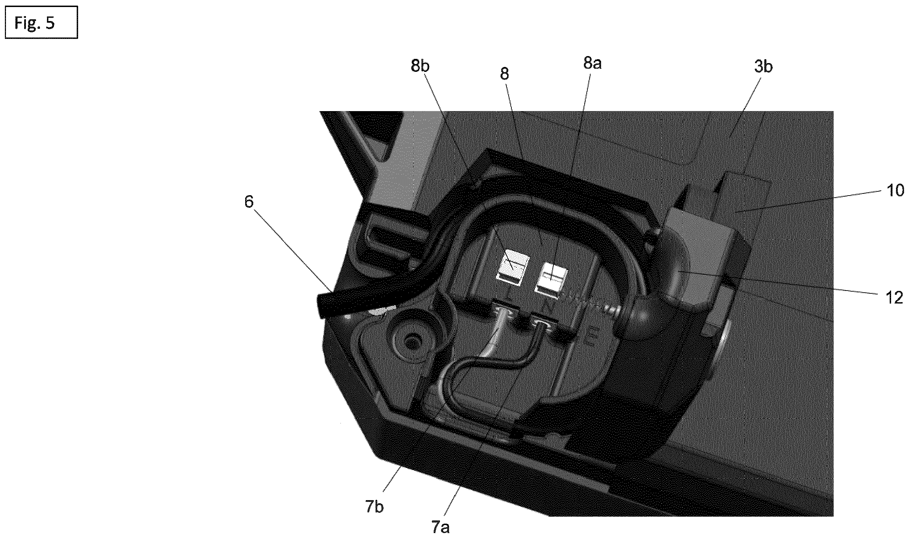

In den Figuren 3 bis 5 ist das erfindungsgemäße Anschlusssystem 2 gemäß eines zweiten Ausführungsbeispiels dargestellt. Das Anschlusssystem 2 gemäß dem zweiten Ausführungsbeispiel ist im Wesentlich identisch zu dem Anschlusssystem 2 gemäß dem ersten Ausführungsbeispiel. Im Unterschied zu dem ersten Ausführungsbeispiel ist die erste Zugentlastungseinrichtung 9 nicht in Form einer C-förmigen bzw. einfach gebogene Nut N, sondern vielmehr als vollständig gebogene Nut N ausgestaltet. Mit anderen Worten: die erste als Nut N ausgestaltete Zugentlastungseinrichtung 9 ist im Wesentlichen einmal entlang einer Außenkante der Buchsenvorrichtung 5 positioniert. Im Gegensatz zu dem ersten Ausführungsbeispiel ist die erste Zugentlastungseinrichtung 9 länger ausgestaltete und bietet damit einer in die Nut N eingelegten Stromleitung 6 eine höhere Zugentlastung.

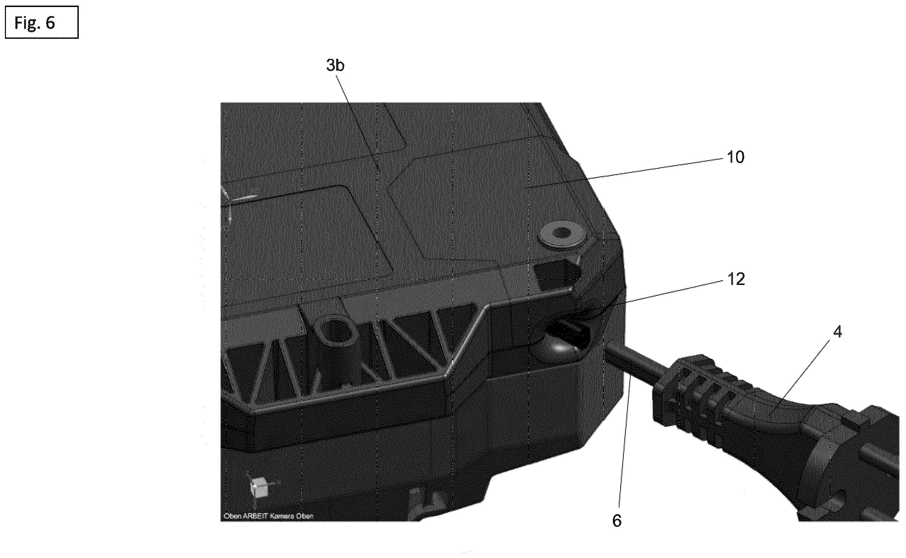

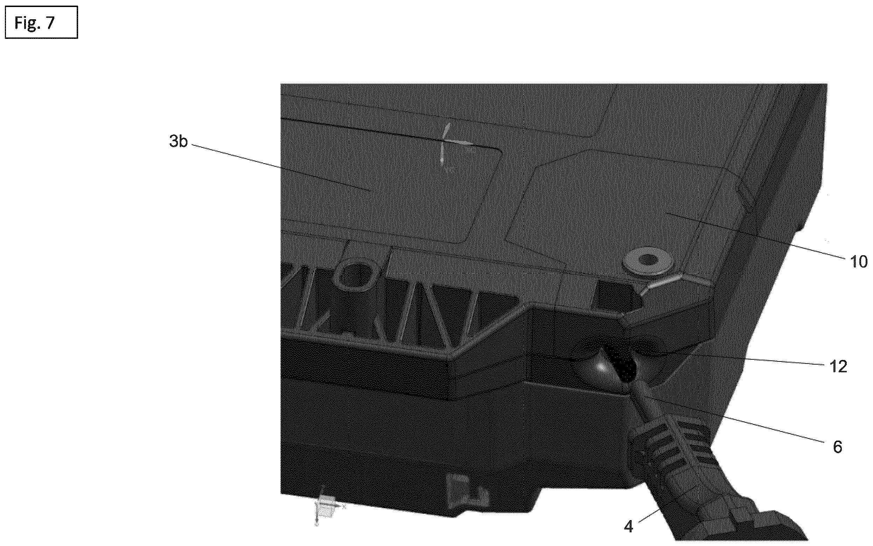

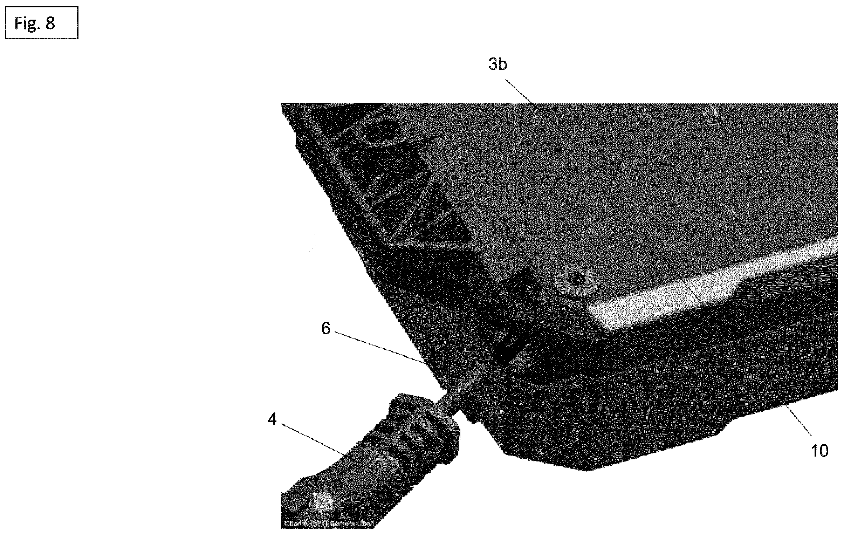

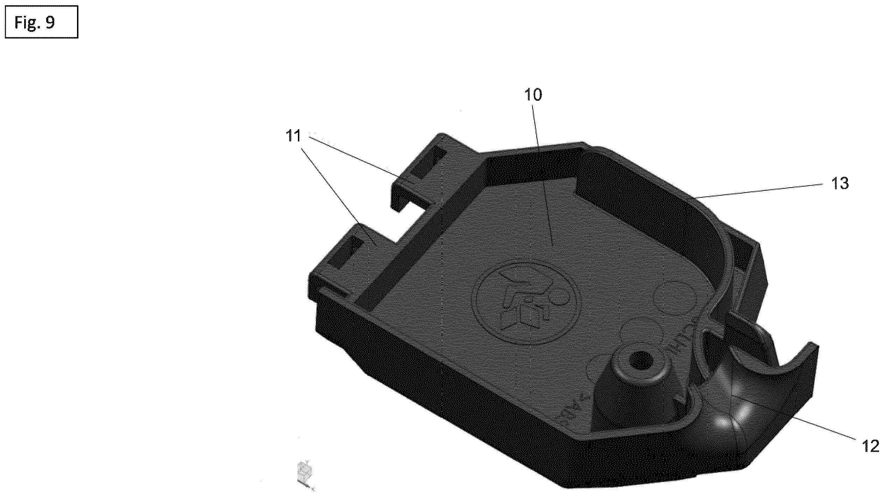

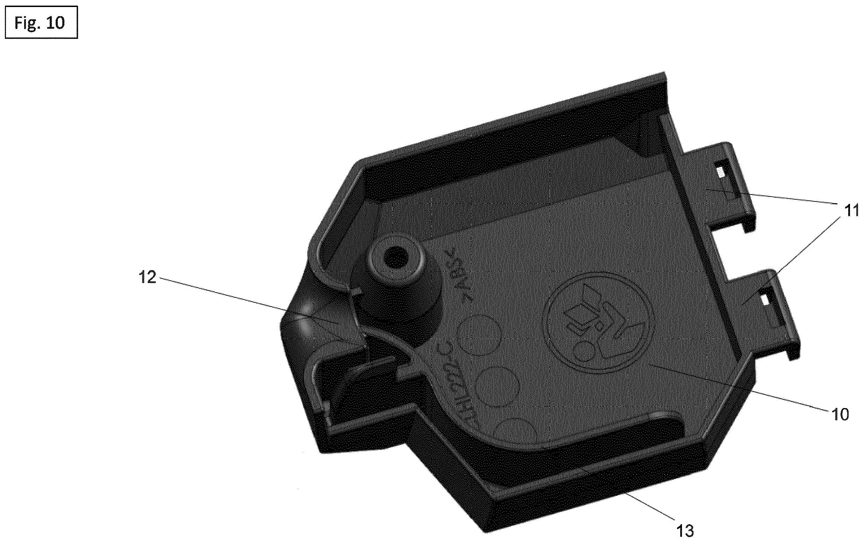

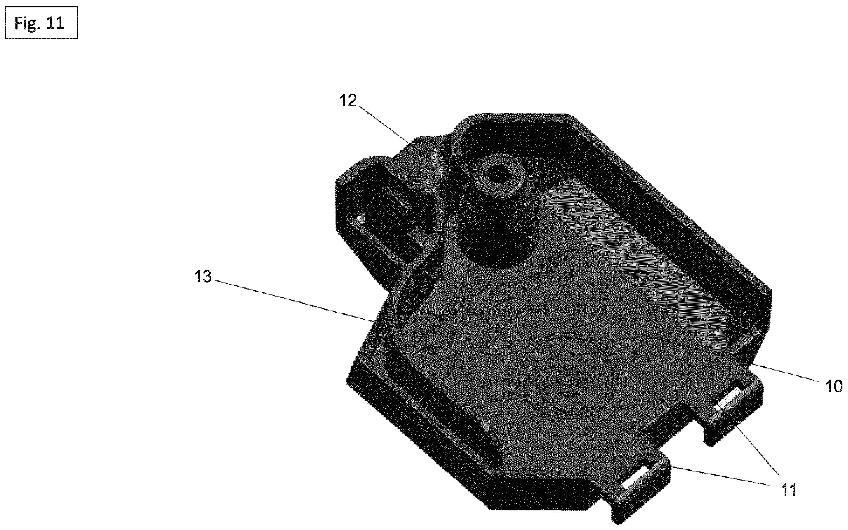

In den Figuren 9 bis 11 ist die Deckeleinrichtung 10 gemäß dem zweiten Ausführungsbeispiel dargestellt. An der Unterseite der Deckeleinrichtung 10 ist eine zweite Zugentlastungseinrichtung 12 positioniert. Im Gegensatz zu dem ersten Ausführungsbeispiel ist die zweite Zugentlastungseinrichtung 12 in Form einer S-förmigen Erhebung 13 ausgestaltet, die einem Teil der als Nut N ausgestalteten ersten Zugentlastungseinrichtung 9 entspricht bzw. zu diesem Teil der Nut N korrespondiert. Wenn sich die Deckeleinrichtung 10 in einem geschlossen Zustand befindet und die Deckeleinrichtung 10 die Buchsenvorrichtung 8 abdeckt (vgl. Figuren 6 bis 8, liegt die als Erhebung 13 ausgestaltete zweite Zugentlastungseinrichtung 12 auf der Stromleitung 6 an, die sich in der als Nut N ausgestalteten ersten Zugentlastungseinrichtung 9 befindet. Die als Erhebung 13 ausgestaltete zweite Zugentlastungseinrichtung 12 übt hierdurch eine zusätzliche Zugentlastung auf die eingelegte Stromleitung 6 auf.

### Bezugszeichenliste

- 1: Ladegerät
- 2: Anschlusssystem
- 3: Gehäuse
- 3a: Oberseite des Gehäuses
- 3b: Unterseite des Gehäuses
- 3c: erste Seitenwand
- 3d: zweite Seitenwand
- 3e: dritte Seitenwand
- 3f: vierte Seitenwand
- 4: Anschlussstecker
- 5: Buchsenvorrichtung
- 6: Stromleitung
- 6a: erstes Ende der Stromleitung
- 6b: zweites Ende der Stromleitung
- 7a: erste Leitung
- 7b: zweite Leitung
- 8: Buchsenelement
- 8a: Anschluss für die erste Leitung
- 8b: Anschluss für die zweite Leitung
- 9: erste Zugentlastungseinrichtung
- 10: Deckeleinrichtung
- 11: Scharnier
- 12: zweite Zugentlastungseinrichtung
- 13: Erhebung
- D: Durchmesser der Nut
- N: Nut

## Patentansprüche

1. Anschlusssystem (2), insbesondere für ein Ladegerät (1) oder eine Werkzeugmaschine, enthaltend einen Anschlussstecker (4) mit einer Stromleitung (6) und eine Buchsenvorrichtung (5) mit wenigstens einem Buchsenelement (8) zum wiederlösbaren Verbinden mit dem Anschlussstecker (4),
**dadurch gekennzeichnet, dass** die Buchsenvorrichtung (5) eine erste Zugentlastungseinrichtung (9) enthält, um einer auf die Stromleitung (6) ausgeübten Zuglast entgegenzuwirken, wenn sich der Anschlussstecker (4) und das Buchsenelement (8) in einem verbundenen Zustand befinden.

2. Anschlusssystem (2) nach Anspruch 1,
**dadurch gekennzeichnet, dass** die Buchsenvorrichtung (5) eine zweite Zugentlastungseinrichtung (12) enthält,

3. Anschlusssystem (2) nach Anspruch 2,
**dadurch gekennzeichnet, dass** die zweite Zugentlastungseinrichtung (12) im Wesentlichen als bogenförmigen Nut (N) zur Aufnahme wenigstens eines Teilabschnitts der Stromleitung (6) ausgestaltet ist.

4. Anschlusssystem (2) nach Anspruch 2,
**dadurch gekennzeichnet, dass** die zweite Zugentlastungseinrichtung (12) im Wesentlichen als Würgenippel mit einer im Wesentlichen zentralen Aussparung zur Durchführung der Stromleitung (6) ausgestaltet ist.

5. Anschlusssystem (2) nach Anspruch 2,
**dadurch gekennzeichnet, dass** die zweite Zugentlastungseinrichtung (12) im Wesentlichen als Verschraubungseinrichtung mit einem Klemmelement zum wiederlösbaren Einklemmen der Stromleitung (6) ausgestaltet ist.

6. Anschlusssystem (2) nach wenigstens einem der Ansprüche 2 bis 4,
**gekennzeichnet durch** eine Deckeleinrichtung (10), wobei die Deckeleinrichtung (10) die zweite Zugentlastungseinrichtung (12) enthält und zum wenigstens teilweilen Abdecken der Buchsenvorrichtung (5) ausgestaltet ist.

7. Ladegerät (1) mit einem Anschlusssystem (2) enthaltend einen Anschlussstecker (4) mit einer Stromleitung (6) und eine Buchsenvorrichtung (5) mit wenigstens einem Buchsenelement (8) zum wiederlösbaren Verbinden mit dem Anschlussstecker (4) nach wenigstens einem der Ansprüche 1 bis 6.

8. Werkzeugmaschine mit einem Anschlusssystem (2) enthaltend einen Anschlussstecker (4) mit einer Stromleitung (6) und eine Buchsenvorrichtung (5) mit wenigstens einem Buchsenelement (8) zum wiederlösbaren Verbinden mit dem Anschlussstecker (4) nach wenigstens einem der Ansprüche 1 bis 6.

9. Buchsenvorrichtung (5) mit wenigstens einem Buchsenelement (8) zum wiederlösbaren Verbinden mit einem Anschlussstecker (4) für ein Anschlusssystem (2), insbesondere für ein Ladegerät (1) oder eine Werkzeugmaschine, nach wenigstens einem der Ansprüche 1 bis 6.
